# EUROPEAN PATENT SPECIFICATION

(11) **EP 0 567 313 B1**
(45) Date of publication and mention of the grant of the patent: **22.07.1998**
(21) Application number: 93303100.7
(22) Date of filing: 21.04.1993
(51) Int. Cl.: C08K 5/18

(54) **Thermoplastic graft copolymer composition**
Zusammensetzung von thermoplastischen Pfropfcopolymer
Composition de copolymère greffé thermoplastique

(30) Priority: 23.04.1992 JP 104499/92
(43) Date of publication of application: 27.10.1993
(73) Proprietor: SUMITOMO CHEMICAL COMPANY LIMITED, Osaka-shi, Osaka 541 (JP)
(72) Inventor: Niwano, Masahiro, Tsukuba-shi (JP); Manabe, Kenji, Tsukuba-shi (JP)
(74) Representative: Ablewhite, Alan James

(56) References cited:
- EP-A- 0 287 233
- EP-A- 0 309 283
- EP-A- 0 511 385
- CHEMICAL ABSTRACTS, vol. 112, no. 6, 5 February 1990, Columbus, Ohio, US; abstract no. 37900a, GOGH T. ET AL. 'Preparation of aralkyldiphenylamine derivatives as nontoxic antioxidants and heat stabilizers for rubbers and plastics' page 107; column 1

## Description

The present invention relates to a thermoplastic graft copolymer composition which can be used as a thermoplastic elastomer. More particularly, it relates to a thermoplastic graft copolymer composition having an improved thermal aging resistance.

Thermoplastic elastomers (hereinafter abbreviated as TPE's in some cases) now industrially used are roughly divided into two groups, i.e., TPE's composed of a block copolymer comprising soft segments and hard segments, and TPE's referred to as elastomer alloys which are composed of a partially crosslinked rubber and a plastic which has undergone phase separation from the rubber. As the former, there are known block copolymers referred to as polyester elastomers which comprise poly(tetramethylene glycol) aliphatic polyether portions and polyester portions such as poly(ethylene terephthalate) portions, and block copolymers referred to as polyamide elastomers which comprise aliphatic polyether portions and polyamide portions such as poly(dodecanoic lactam) portions. As the latter, there are known elastomer alloys obtained by subjecting an alloy of a polypropylene and an ethylene-propylene-diene ternary copolymer to dynamic vulcanization.

However, as TPE's composed of a block copolymer comprising soft segments and hard segments, there can be produced only relatively hard elastomers having a Shore D hardness of about 40 or more. These elastomers do not have a very high heat resistance.

As the elastomer alloys, soft TPE's having a Shore A hardness of about 30 can be produced but do not have a high heat resistance.

The specification of European Patent Laid-Open No. 0287233 discloses that a copolymer having an aromatic oligoester group as a mesogen group, i.e., a copolymer obtained by covalent bonding of an aromatic oligomer to an acrylic resin or a polyester resin, is made into a polymer solution for coating. This polymer solution is characterized in that it can give a coating film having a high hardness.

Japanese Patent Unexamined Publication No. 4-11657 discloses a thermoplastic graft copolymer in which the main chain is a polymer having a glass transition temperature of 10°C or lower and the side chain is an aromatic oligomer having a flow temperature of 100°C or higher. This graft copolymer is characterized in that it can give a thermoplastic elastomer having a high heat resistance.

An object of the present invention is to provide a thermoplastic graft copolymer composition which is useful as a thermoplastic elastomer excellent in heat resistance, in particular, thermal aging resistance.

In consideration of such conditions, the present inventors earnestly investigated and consequently found that a thermoplastic graft copolymer composition comprising a thermoplastic graft copolymer obtained by graft copolymerizing a specified aromatic oligomer onto a polymer having a glass transition temperature of 10°C or lower obtained by copolymerizing at least one acrylic acid alkyl ester, ethylene and at least one unsaturated monomer copolymerizable with them, and a specified amount of at least one arylamine compound, is a thermoplastic elastomer excellent in thermal aging resistance, whereby the present invention has been accomplished.

In detail, the present invention relates to a thermoplastic graft copolymer composition comprising 100 parts by weight of a thermoplastic graft copolymer obtained by graft copolymerizing an aromatic oligomer having a flow temperature (defined below) of 100°C or higher onto a polymer having a glass transition temperature of 10°C or lower obtained by copolymerizing at least one acrylic acid alkyl ester, ethylene and at least one unsaturated monomer copolymerizable with them, and 0.1 to 6 parts by weight of at least one arylamine compound.

Flow temperature: a temperature at which when the aromatic oligomer is melted with heating at a heating rate of 4°C/min and extruded through a nozzle with an inside diameter of 1 mm and a length of 10 mm under a load of 100 kg/cm², the melt viscosity of the molten oligomer is 48,000 poise.

The main chain polymer constituting the graft copolymer used in the present invention is a polymer obtained by copolymerizing at least one acrylic acid alkylester, ethylene and at least one unsaturated monomer copolymerizable with them, and has a glass transition temperature of 10°C or lower, preferably 0°C or lower, more preferably -10°C or lower. The term "glass transition temperature" used here means a second-order transition point at which heat absorption is observed at a heating rate of 10°C/min in a differential scanning calorimeter (DSC). When the glass transition temperature (hereinafter abbreviated as Tg in some cases) of said polymer is higher than 10°C, the thermoplastic graft copolymer composition of the present invention does not have rubber elasticity in a use temperature range of ordinary temperature or higher. Therefore, such a glass transition temperature is not desirable.

Preferable examples of the acrylic acid alkyl ester as a monomer component which forms the aforesaid main chain polymer are methyl acrylate, ethyl acrylate, n-propyl acrylate, and n-butyl acrylate. Of these, methylacrylate and ethyl acrylate are particularly preferable.

As the unsaturated monomer copolymerizable with the acrylic acid alkyl ester and ethylene, there are preferably used unsaturated monomers having a functional group in the molecule which is suitable for reaction with the aromatic oligomer having a flow temperature of 100°C or higher described hereinafter.

Preferable examples of said unsaturated monomer are unsaturated monomers having in the molecule an epoxy group, carboxyl group, hydroxyl group or oxazoline group, such as glycidyl methacrylate, glycidyl acrylate, acrylic acid, methacrylic acid, maleic acid monoalkyl esters, 2-hydroxyethyl methacrylate, 2-vinyl-substituted 2-oxazoline, etc. Of these, glycidyl methacrylate and maleic acid monoalkyl esters are preferably used.

The copolymer of the above-mentioned acrylic acid alkyl ester, ethylene and unsaturated monomer can be obtained usually by well-known radical polymerization.

The aromatic oligomer having a flow temperature of 100°C or higher which constitutes the thermoplastic graft copolymer used in the present invention is an oligomer which has a benzene ring in the main skeleton and preferably comprises structural units represented by the general formula (1) in an amount of 50% by weight or more, preferably 60% by weight or more, more preferably 90% by weight or more: 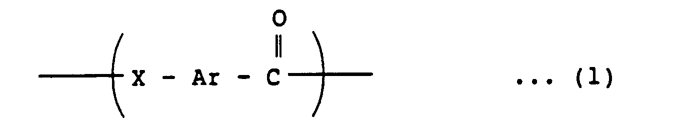 wherein X is selected from oxygen atom and sulfur atom, the oligomer being able to contain both a structural unit containing an oxygen atom and a structural unit containing a sulfur atom; and Ar is a group selected from groups represented by the general formulas (2), (3) and (4): 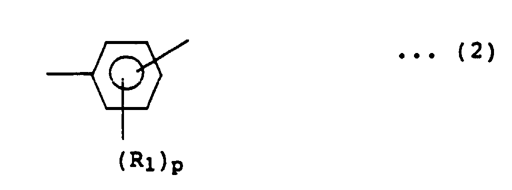 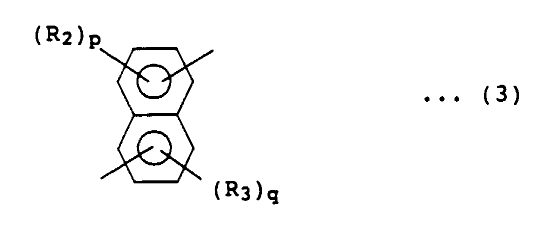 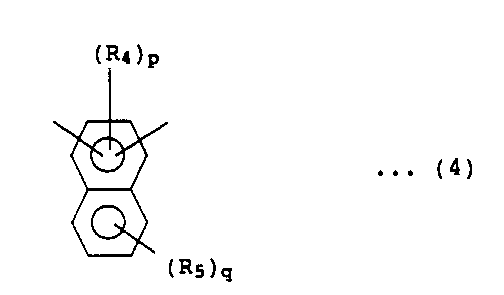 wherein R₁, R₂, R₃, R₄ and R₅ are independently a group selected from the group consisting of alkyl groups having 1 to 3 carbon atoms and phenyl group; and p and q are independently zero or an integer 1 or 2.

The number average degree of polymerization of said oligomer is 2 to 10, preferably 3 to 8, more preferably 4 to 7. The number average molecular weight of said oligomer is preferably 300 to 1,500, more preferably 400 to 1,000. When the number average molecular weight is less than 300, the thermal stability of said oligomer is lowered, its flow temperature is markedly lowered, and the heat resistance of the resulting graft copolymer is deteriorated. Therefore, such a molecular weight is not desirable. When the number average molecular weight exceeds 1,500, the flow temperature approaches the thermal decomposition temperature of said oligomer, so that the moldability of the resulting graft copolymer is deteriorated. Therefore, such a molecular weight is not desirable.

As said aromatic oligomer, there is preferably used an aromatic oligomer whose end is a hydroxyl group or a carboxyl group. Although such a hydroxyarylcarboxylic acid oligomer can be produced by a conventional process for producing a polycondensation product by using, as materials, a hydroxyarylcarboxylic acid and optionally one or more monomers copolymerizable therewith, for example, hydroxyalkylcaroboxylic acids, aminoalkylcarboxylic acids and aminoarylcarboxylic acids which have 2 to 6 carbon atoms, and monofunctional phenol compounds, carboxylic compounds and amino compounds, it is produced preferably by the following process.

An acetoxyarylcarboxylic acid is obtained by adding an acetylating agent such as acetic anhydride or acetyl chloride to a hydroxyarylcarboxylic acid, followed by heating and stirring. When the hydroxyarylcarboxylic acid is acetylated with acetic anhydride in the above reaction, the acetylation can be achieved by carrying out the reaction at 100°C or higher for 15 minutes or more. When acetyl chloride is used in place of acetic anhydride, the acetylation can be achieved by carrying out the reaction at room temperature or higher for 30 minutes or more. In both of these cases, acetic anhydride or acetyl chloride is added preferably in an excess amount over the number of moles of the hydroxyl group with which acetic anhydride or acetyl chloride is to be reacted. Preferably, acetic anhydride or acetyl chloride is added in an amount of about 1.1 times the number of moles of the hydroxy group. After completion of the acetylation, polycondensation reaction is allowed to proceed by eliminating acetic acid from the system while heating and stirring the system. The temperature in the system has to be adjusted to preferably 200°C or higher. The number average molecular weight can be controlled by controlling the amount of acetic acid distilled off, when a bifunctional compound such as a hydroxyarylcarboxylic acid is used as a starting material. For adjusting the degree of polymerization to a desired value, it is necessary to calculate the amount of the monomer(s) such as hydroxyarylcarboxylic acid charged and the amount of acetic acid to be distilled off. When a hydroxyarylcarboxylic acid and a monofunctional phenol compound, carboxylic acid compound or the like are used as starting materials, the number average degree of polymerization is determined by the molar ratio of the hydroxyarylcarboxylic acid to the monofunctional compound. A mercaptoarylcarboxylic acid can be produced according to the above.

For control of the thermal properties such as flow temperature of said oligomer, the oligomer may contain a structure formed by polycondensation of a monomer such as a hydroxyalkylcarboxylic acid, aminoalkylcarboxylic acid, aminoarylcarboxylic acid or the like, and a structure formed by attachment of a structural unit formed by condensation of a monofunctional carboxylic acid compound, phenol compound and amino compound to one end of the oligomer by condensation.

The aromatic oligomer thus obtained is preferably washed with a solvent such as methanol, ethanol, acetone or the like to be freed of monomers and dimers, for the purpose of improving its thermal stability.

The thermoplastic graft copolymer used in the present invention can be used as a thermoplastic elastomer having rubber elasticity at a temperature higher than the glass transition temperature of the main chain polymer used. Said graft copolymer develops properties as thermoplastic elastomer singly or as a mixture with a polymer having a Tg of 10°C or lower which is the same as or different from the main chain polymer constituting said graft copolymer, and/or the same compound as the side chain oligomer of said graft copolymer.

However, in any of these cases, the proportion of the polymer having a Tg of 10°C or lower is not more than 99% by weight and not less than 50% by weight, preferably not more than 97% by weight and not less than 65% by weight, based on the total weight of the polymers. When the proportion of the polymer having a Tg of 10°C or lower is less than 50% by weight based on the total weight of the polymers, the resulting graft copolymer hardly has rubber elasticity in a temperature range of room temperature or higher. Therefore, such a proportion is not desirable. When the proportion exceeds 99% by weight, physical crosslinked points formed by the aromatic oligomer as side chain are decreased, so that the resulting graft copolymer undergoes marked plastic deformation even at room temperature. Therefore, such a proportion is not desirable.

As a process for producing the graft copolymer used in the present invention, there can be exemplified a process in which the above-mentioned acrylic acid alkyl ester-ethylene based copolymer having a glass transition temperature of 10°C or lower and having a reactive functional group such as epoxy group, carboxyl group, hydroxyl group, oxazoline,group or the like is reacted with an aromatic oligomer having a flow temperature of 100°C or higher and having only at one end a functional group reactive with the functional group of said copolymer.

As the functional group at the end of the aromatic oligomer used in the present invention which is reacted with the functional group contained in the acrylic acid alkyl ester-ethylene based copolymer, there can be exemplified carboxyl group, hydroxyl group, thiol group, acid anhydride groups and epoxy group.

A combination of the reactive functional group of the main chain polymer and the functional group of the side chain which is reactive with the reactive functional group of the main chain may be properly chosen unless it defeats the object of the present invention.

As a process for producing the thermoplastic graft copolymer used in the present invention, there can be exemplified a process in which an acrylic acid alkyl ester-ethylene based copolymer having a glass transition temperature of 10°C or lower and having a functional group reactive with a carboxyl group is reacted with an aromatic oligomer having a flow temperature of 100°C or higher and having a carboxyl group at one end.

Preferable examples of the functional group reactive with a carboxyl group are epoxy group and oxazoline group. Epoxy group is particularly preferable.

The aromatic oligomer having a flow temperature of 100°C or higher and having a carboxyl group at one end which is used in the present invention is preferably one which is represented by the general formula (5): 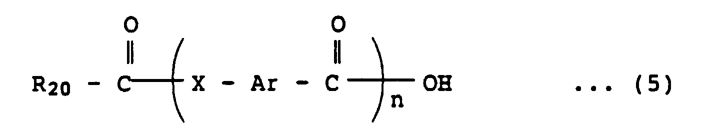 wherein X is an atom selected from oxygen atom and sulfur atom, the oligomer being able to contain both a structural unit containing an oxygen atom and a structural unit containing a sulfur atom; R₂₀ is an alkyl group having 5 or more carbon atoms or an aralkyl group having 6 or more carbon atoms; and Ar is a group selected from groups represented by the general formulas (2), (3) and (4).

The aforesaid oligomer may be used after being copolymerized with a hydroxycarboxylic acid having 2 to 6 carbon atoms. The number average molecular weight of the above-mentioned aromatic oligomer having a carboxyl group at one end is preferably 300 to 1,500. Its number average degree of polymerization (n) is 2 to 10, preferably 3 to 8, more preferably 4 to 7.

As the aromatic oligomer having a carboxyl group at one end, a polycondensation product can be obtained by subjecting a mixture of a monocarboxylic acid containing an alkyl group having 5 or more, preferably 5 to 20 carbonatoms, or an aryl group having 6 or more, preferably 6 to 15 carbon atoms, a hydroxyarylcarboxylic acid and optionally a hydroxycarboxylic acid having 2 to 6 carbon atoms, to acetylation with acetic anhydride or acetyl chloride, followed by elimination of acetic acid, in the same manner as for the above-mentioned production mainly of a hydroxyarylcarboxylic acid polymer. Also when the aromatic oligomer is synthesized by using a mercaptoarylcarboxylic acid in place of a part or the whole of the hydroxyarylcarboxylic acid, it can be produced according to the above. In this reaction, the number average molecular weight is determined by the molar ratio of the monocarboxylic acid to the hydroxycarboxylic acid.

As described above, the thus obtained aromatic oligomer having a carboxyl group at one end is preferably washed with a solvent such as methanol, ethanol, acetone or the like.

The aromatic oligomer having a flow temperature of 100°C or higher and having an acid anhydride group at one end which is used in the present invention is preferably one which is represented by the general formula (6): 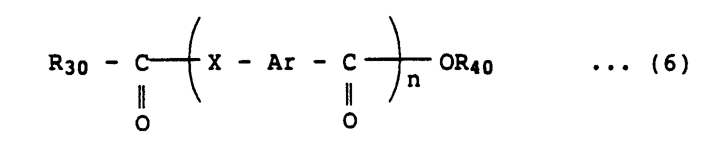 wherein X is an atom selected from oxygen atom and sulfur atom, the oligomer being able to contain both a structural unit containing an oxygen atom and a structural unit containing a sulfur atom; in the case of R₃₀ being a group represented by the general formula (10): 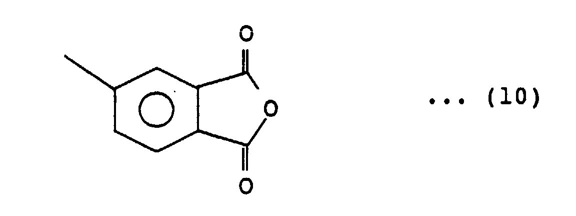 R₄₀ is an atom or group selected from the group consisting of hydrogen atom, alkyl groups having 1 to 10 carbon atoms and aryl groups having 6 to 20 carbon atoms; in the case of R₄₀ being a group represented by the general formula (11): 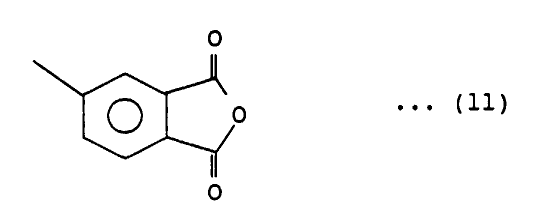 R₃₀ is a group selected from the group consisting of alkyl groups having 1 to 10 carbon atoms and aryl groups having 6 to 20 carbon atoms; Ar is a group selected from groups represented by the general formulas (2), (3) and (4); and n is 2 to 10, preferably 3 to 8, more preferably 4 to 7, in average based on the number average molecular weight.

The aromatic oligomer having a flow temperature of 100°C or higher and having an acid anhydride group at one end can be obtained by mixing trimellitic anhydride or 4-acetoxyphthalic anhydride and an acetoxyarylcarboxylic acid in the molar ratio of 1/1 to 1/10, followed by condensation. When X is a sulfur atom in the general formula (6), the aromatic oligomer can be produced according to this process.

As the acetoxyarylcarboxylic acid used in the present invention, there can be exemplified those obtained by acetylating a hydroxyarylcarboxylic acid having 7 or more, preferably 7 to 20 carbon atoms. Specific examples of the acetoxyarylcarboxylic acid are those represented by the general formulas (7), (8) and (9): 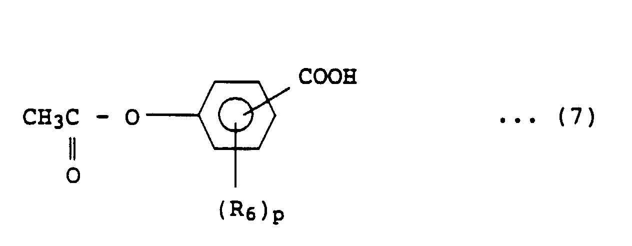 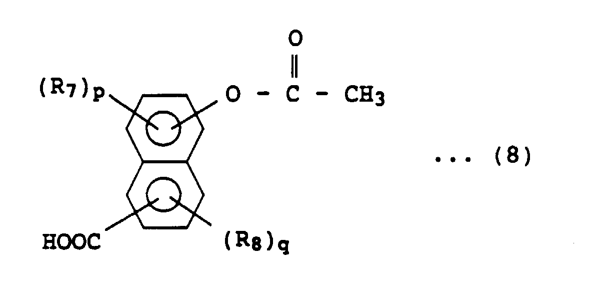 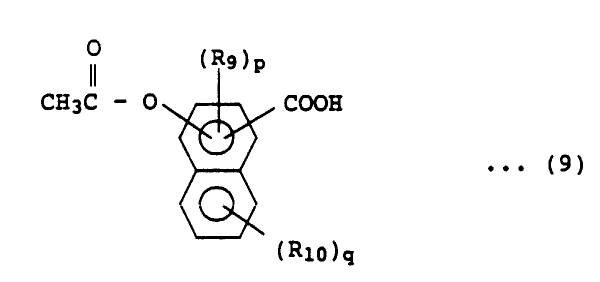 wherein R₆, R₇, R₈, R₉ and R₁₀ are independently a group selected from the group consisting of alkyl groups having 1 to 3 carbon atoms and phenyl group; and p and q is independently zero or an integer 1 or 2.

Of such acetoxyarylcarboxylic acids, paraacetoxybenzoic acid is preferably used.

The aromatic oligomer having an acid anhydride group at one end which is used in the present invention can be obtained by eliminating acetic acid from a mixture of trimellitic anhydride or 4-acetoxyphthalic anhydride and an acetoxyarylcarboxylic acid.

The acetoxyarylcarboxylic acid used in the above reaction can be obtained by acetylating a hydroxyarylcarboxylic acid with acetic anhydride or acetyl chloride in the same manner as above. After completion of the acetylation, trimellitic anhydride or 4-acetoxyphthalic acid anhydride is incorporated into the system, and polycondensation reaction is allowed to proceed by eliminating acetic acid from the system while heating and stirring the system., The temperature in the system has to be adjusted to preferably 200°C or higher.

In addition, the aromatic oligomer obtained is preferably washed with a solvent selected from the group consisting of acetone, tetrahydrofuran, N-methylpyrrolidone, chloroform, etc.

The aromatic oligomer having a flow temperature of 100°C or higher and having a hydroxyl group at one end which is used in the present invention is preferably one which is represented by the general formula (12): 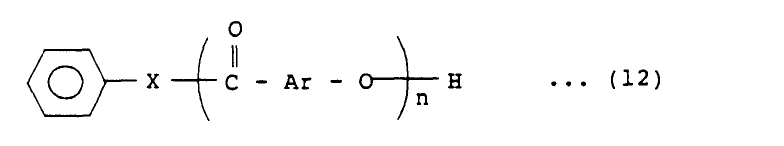 wherein X is an atom selected from oxygen atom and sulfur atom, the oligomer being able to contain both a structural unit containing an oxygen atom and a structural unit containing a sulfur atom; Ar is a group selected from groups represented by the general formulas (2), (3) and (4); and n is 2 to 10, preferably 3 to 8, more preferably 4 to 7, in average based on the number average molecular weight.

The aromatic oligomer having a hydroxyl group at one end can be obtained by heating and stirring a phenyl ester compound of a hydroxyarylcarboxylic acid, followed by elimination of phenol. In this reaction, the degree of polymerization is determined by the amount of phenol distilled off. The phenyl ester compound of a hydroxyarylcarboxylic acid can be obtained by heating and stirring the hydroxyarylcarboxylic acid and phenyl acetate, followed by elimination of acetic acid. As the phenyl ester compound of the hydroxyarylcarboxylic acid, p-hydroxybenzoic acid phenyl ester is preferably used.

In addition, the aromatic oligomer thus obtained is preferably washed with a solvent such as methanol, ethanol, acetone or the like.

The graft copolymer used in the present invention can be obtained by reacting an acrylic acid alkyl ester-ethylene based copolymer having a Tg of 10°C or lower and having a functional group reactive with an aromatic oligomer having a functional group at one end which is to be reacted, with the aromatic oligomer having a flow temperature of 100°C or higher and having the reactive functional group at one end. Although a method for the reaction is not critical, the reaction is carried out preferably by melt kneading.

The melt kneading is conducted at a temperature equal to or higher than the flow temperature of the aromatic oligomer having the reactive functional group at one end. For the melt kneading, any conventional apparatus such as a Banbury mixer, single-screw extruder, twin-screw extruder, roll mill, kneader or the like may be used so long as shearing force can be applied to said copolymer having a Tg of 10°C or lower and said aromatic oligomer at a high temperature.

The reaction temperature is at least the flow temperature of the aromatic oligomer used, and is preferably not higher than the thermal decomposition temperatures of said polymer having a Tg of 10°C or lower used and the aromatic oligomer used. When the reaction temperature is lower than the-flow temperature of the aromatic oligomer used, the functional group of said aromatic oligomer does not easily react with the functional group of said polymer having a Tg of 10°C or lower, so that the desired graft copolymer is difficult to obtain. Therefore, such a reaction temperature is not desirable. When the reaction temperature is higher than the thermal decomposition temperature of said polymer having a Tg of 10°C or lower or said aromatic oligomer, said polymer is markedly decomposed during the kneading reaction, resulting in undesirable influences such as a lowering of the molecular weight. Therefore, such a reaction temperature is not desirable.

For the acceleration of the graft reaction, the reaction temperature is preferably high in the above temperature range, and the reaction time is preferably long. In addition, when an epoxy group participates in the reaction, it is preferable to add, for example, a phosphine type catalyst such as triphenylphosphine, triparatolylphosphine or the like for accelerating the graft reaction.

The arylamine compound used in the present invention includes p-phenylenediamine derivatives, ketone-amine condensation products, naphthylamine and its derivatives, and diphenylamine derivatives.

The p-phenylenediamine derivatives include N,N'-diphenyl-p-phenylenediamine, N,N'-dinaphthyl-p-phenylenediamine, N,N'-diphenyl-p-phenylenediamine, N-isopropyl-N'-phenyl-p-phenylenediamine, N,N'-diallyl-p-phenylenediamine, N-(1,3-dimethylbutyl)-N'-phenyl-p-phenylenediamine, N,N'-di(1,4-dimethylpentyl)-p-phenylenediamine and N,N'-di(1-ethyl-3-methylpentyl)-p-phenylenediamine.

The ketone-amine condensation products include 2,2,4-trimethyl-1,3-dihydroquinoline polymer, 6-ethoxy-2,2,4-trimethyl-1,2-dihydroquinoline, condensation product between acetone and diphenylamine, and condensation product between acetone and N-phenyl-2-naphthylamine.

The naphthylamine and its derivatives include N-phenyl-l-naphthyamine.

The diphenylamine derivatives include 4,4'-dioctyldiphenylamine, 4,4'-dimethoxydiphenylamine and 4,4'-di(α,α-dimethylbenzyl)diphenylamine.

The above arylamine compounds can be used singly or in combination of two or more thereof. Of these, 4,4'-di(α,α-dimethylbenzyl)diphenylamine is preferably used.

The arylamine compound(s) used in the present invention is added preferably in a total amount of 0.1 to 6 parts by weight, preferably 0.5 to 5 parts by weight, per 100 parts by weight of the thermoplastic graft copolymer. When the amount of the arylamine compound(s) is less than 0.1 part by weight, the thermal aging resistance is not markedly improved. Therefore, such an amount is not desirable. When the amount exceeds 6 parts, bloom becomes liable to occur with the lapse of time. Therefore, such an amount is not desirable.

In addition, the thermoplastic graft copolymer composition comprising the thermoplastic graft copolymer and the arylamine compound(s) of the present invention may be used after proper and optional incorporation thereinto of fillers such as carbon black, silica, calcium carbonate, mica, diatomaceous earth, zinc oxide, basic magnesium carbonate, aluminum silicate, titanium dioxide, talc, glass fiber, etc., plasticizers, colorants, ultraviolet absorbers, flame retardants, oil resistance improvers, scorch retardants, tackifiers and the like.

The arylamine compound may be blended at any of the following three times: before the graft reaction for producing the aforesaid graft copolymer, during the graft reaction, and after completion of the graft reaction.

The present invention is illustrated in further detail with the following examples, which should not be construed as limiting the scope of the invention.

Conditions of measurement of physical properties are as follows.

### Tensile test:

Carried out according to ASTM D-638 by means of a tensile tester Tensilon Model EM-500 manufactured by Toyo Baldwin Co., Ltd.

### Compression set test:

Carried out according to JIS K-6301 by means of a constant-strain compression tester manufactured by Toyo Seiki Seisaku-sho Co., Ltd. The measurement conditions were 100°C for 70 hours.

### Shore hardness:

Measured according to ASTM D-2240 by means of a Shore hardness tester manufactured by Toyo Seiki Seisaku-sho Co., Ltd. The thickness of a sample was 4.2 mm. The measurement was carried out at 15-second intervals.

### Melt index:

Measured at 260°C under a load of 10 kg by means of a melt indexer manufactured by Toyo Seiki Seisaku-sho Co., Ltd.

### Examples 1 to 13 and Comparative Examples 1 to 8

An ethylene-methyl acrylate-glycidyl methacrylate terpolymer (ethylene/methyl acrylate/ glycidyl methacrylate = 38.7/59/2.3 by weight, MI at 190°C under a load of 2.16 kg = 8.7 g/10 min) was obtained according to the method described in Example 5 of Japanese Patent Unexamined Publication No. 61-127709. The glass transition temperature of this polymer was measured under nitrogen at a heating rate of 10°C/min by means of a stand-alone type differential scanning calorimeter Model DSC-50 manufactured by Shimadzu Corp. Based on the diagram thus obtained, the heat absorption initiation temperature was calculated by a conventional method by drawing a tangent line and was taken as glass transition temperature. The glass transition temperature was -31.5°C. For the polymer, a heating loss curve was obtained under nitrogen at a heating rate of 10°C/min by means of a stand-alone type thermo-gravimetric apparatus TGA-50 manufactured by Shimadzu Corp. As a result of the measurement, it was found that the polymer was not decreased in weight below about 350°C and was thus thermally stable.

Next, an aromatic oligomer having a carboxyl group at one end was synthesized in the following manner. Into a 2-liters separable flask equipped with an anchor-shaped agitating blade, three-way cock and Dimroth condenser were charged 1.4 moles (170.8 g) of benzoic acid, 5.6 moles (772.8 g) of para-hydroxybenzoic acid and 6.2 moles (633 g) of acetic anhydride. As the upper and lower packings of the separable flask, those obtained cut out of a Teflon sheet were used. While rotating the anchor-shaped agitating blade at 80 rpm, introducing nitrogen through the three-way cock to replace the inner atmosphere of the system with nitrogen, and passing cooling water through the Dimroth condenser, the separable flask was placed in an oil bath and the oil bath was heated to 160°C. Acetylation reaction was carried out for 2 hours while maintaining the oil bath at 160°C and refluxing acetic anhydride. After completion of the acetylation reaction, the Dimroth condenser was quickly replaced by Vigreux column equipped with a Liebig condenser, and the oil bath was heated to 280°C. The time required for raising the temperature from 160°C to 280°C was about 50 minutes. Then, acetic acid and acetic anhydride which had been distilled from the system were recovered through the Liebig condenser while maintaining the temperature of the oil bath at 280°C. The recovery of the acetic acid and the like was initiated after the replacement by the Liebig condenser. In about 3 hours, 731 g of acetic acid and the like were recovered and the polycondensation was completed. After the completion of the polycondensation, the aromatic oligomer was taken out and ground to a particle size of 1 mm or less with a grinder.

The flow temperature of the aromatic oligomer was measured and found to be 192°C. Then, the heating loss of the aromatic oligomer was measured under nitrogen at a heating rate of 10°C/min by means of the aforesaid apparatus Model TGA-50. This measurement proved that the aromatic oligomer was stable below about 280°C. In a molten state, the aromatic oligomer showed optical anisotropy. Next, as to the number average degree of polymerization of the aromatic oligomer, analysis and measurement were carried out according to the chemical decomposition method described in Example 1 of Japanese Patent Unexamined Publication No. 4-11657 to find that n = 4.9 in the following general formula (13):

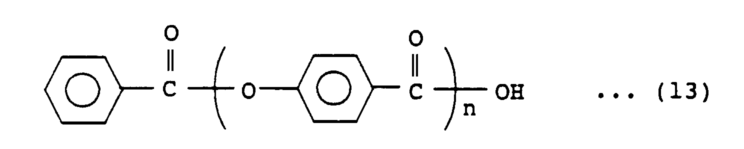

The above-mentioned ethylene-methyl acrylate-glycidyl methacrylate terpolymer and aromatic oligomer with a number average degree of polymerization of 4.9 represented by the above general formula which has a carboxylic acid residue at one end, and triparatolyl-phosphine (mfd. by Hokuko Kagaku Kogyo K.K.) were pre-blended in the weight ratio of 80 : 20 : 0.5 (= 320 g : 80 g : 2.0 g) with a Laboplastomill Model 100R-100 (mfd. by Toyo Seiki Seisaku-sho Co., Ltd.) provided with a B-600 type mixer and a roller-shaped blade for R-500 type, for 5 minutes at a preset temperature of 120°C and a blade revolution rate of 50 rpm. The resulting pre-blend was cut into pieces about 10 mm square. Then, the pieces of the pre-blend were fed to a 30-mm twin-screw extruder PCM-30 (mfd. by Ikegai Corp.) at a feed rate of 7 to 8 kg/hr under conditions of a cylinder temperature of 280°C and a screw revolution rate of 200 rpm, and graft reaction was carried out in the twin-screw extruder. In this case, the residence time in the twin-screw extruder was about 40 seconds. The MI (260°C, 10 kg load) of the graft copolymer thus obtained was 51 g/10 min, and the compression set (100°C, 70 hours) of a press-molded product of the graft copolymer was 57%. According to the method described in Example 1 of Japanese Patent Unexamined Publication No. 4-11657, the graft copolymer was chemically decomposed and then analyzed by a high performance liquid chromatography, and its graft efficiency (= the degree of conversion of epoxy group) was calculated to be 88%.

Subsequently, 50 g of the graft copolymer obtained and the stabilizer(s) listed in Tables 1 to 3 were melt-kneaded at 250°C and 100 rpm for 5 minutes by means of a Laboplastomill Model 20R-200 (mfd. by Toyo Seiki Seisakusho Co., Ltd.) provided with a R-60 type mixer and a roller-shaped blade, to obtain a thermoplastic graft copolymer composition. Each of the various graft copolymer compositions thus obtained was made into a 120 mm x 120 mm x 2.1 mm pressed sheet at 280°C. Test pieces for measuring various physical properties were cut out of the pressed sheet, and a heat aging test carried out in an air oven at the temperatures shown in Tables 1 to 3 for the periods shown therein. Then, tensile tests and hardness measurement were carried out. The results obtained are shown in Tables 1 to 3.

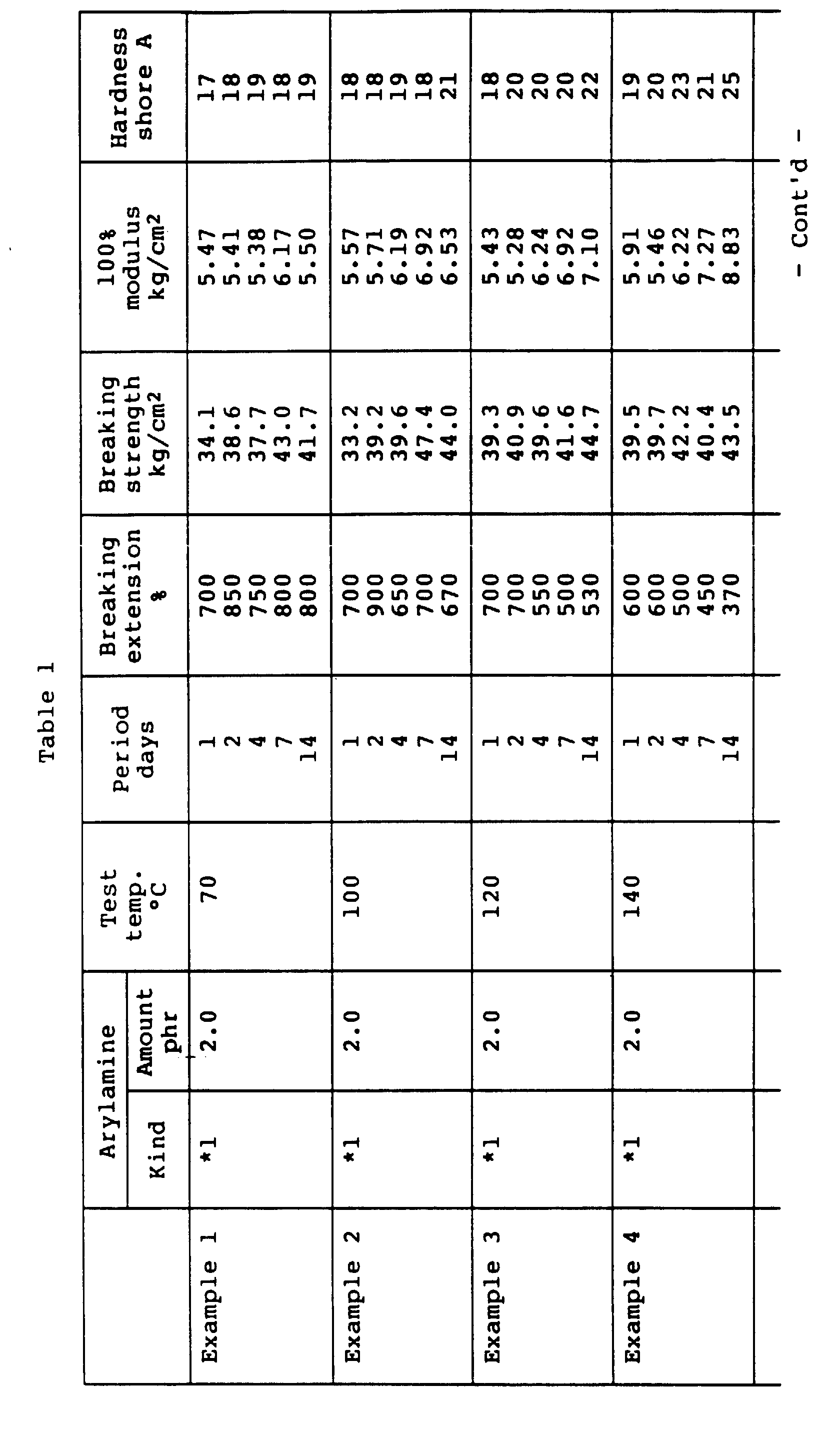

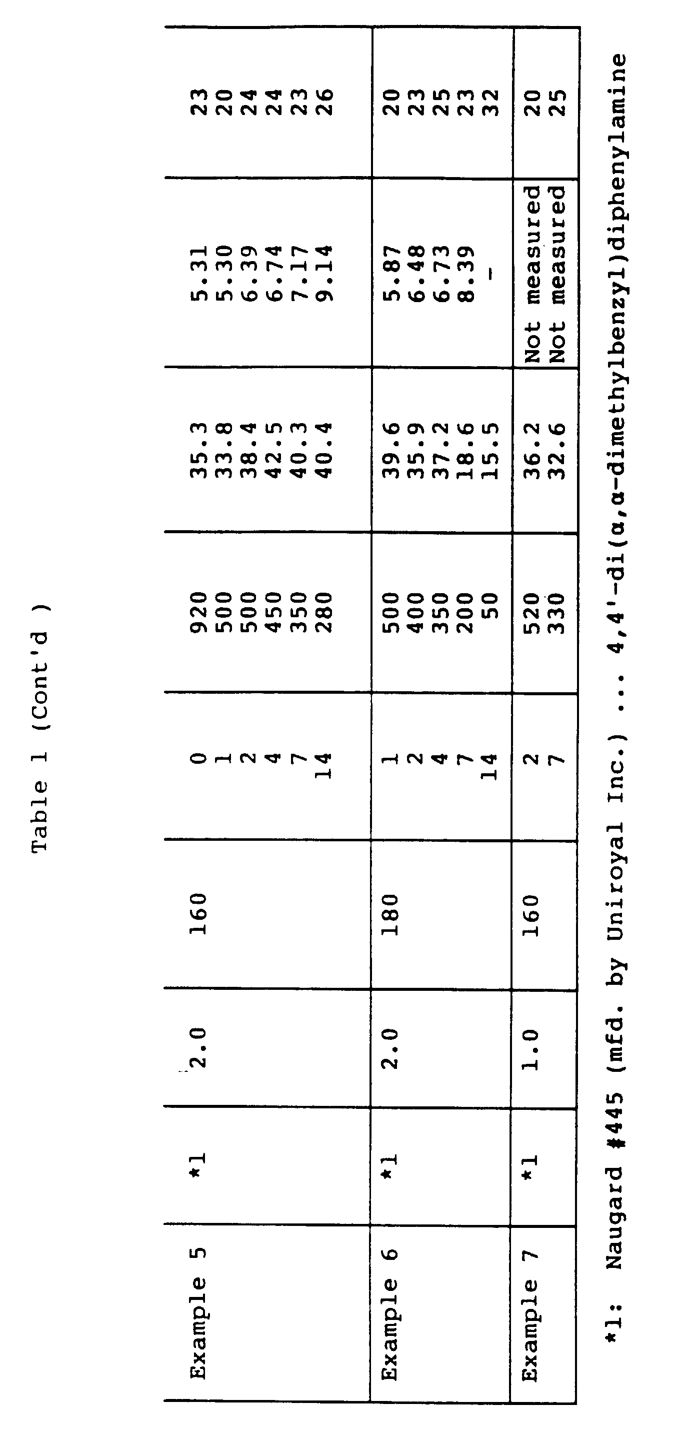

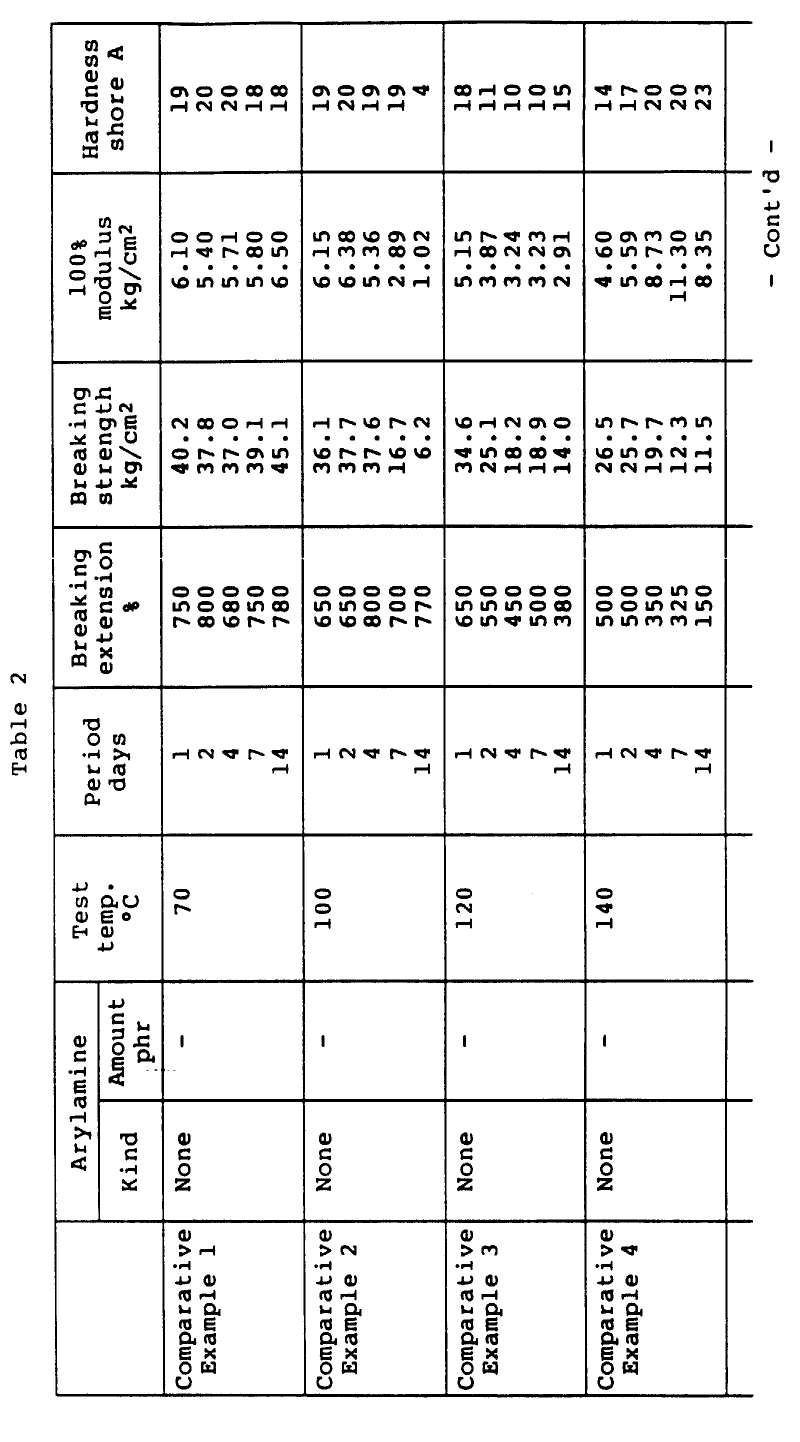

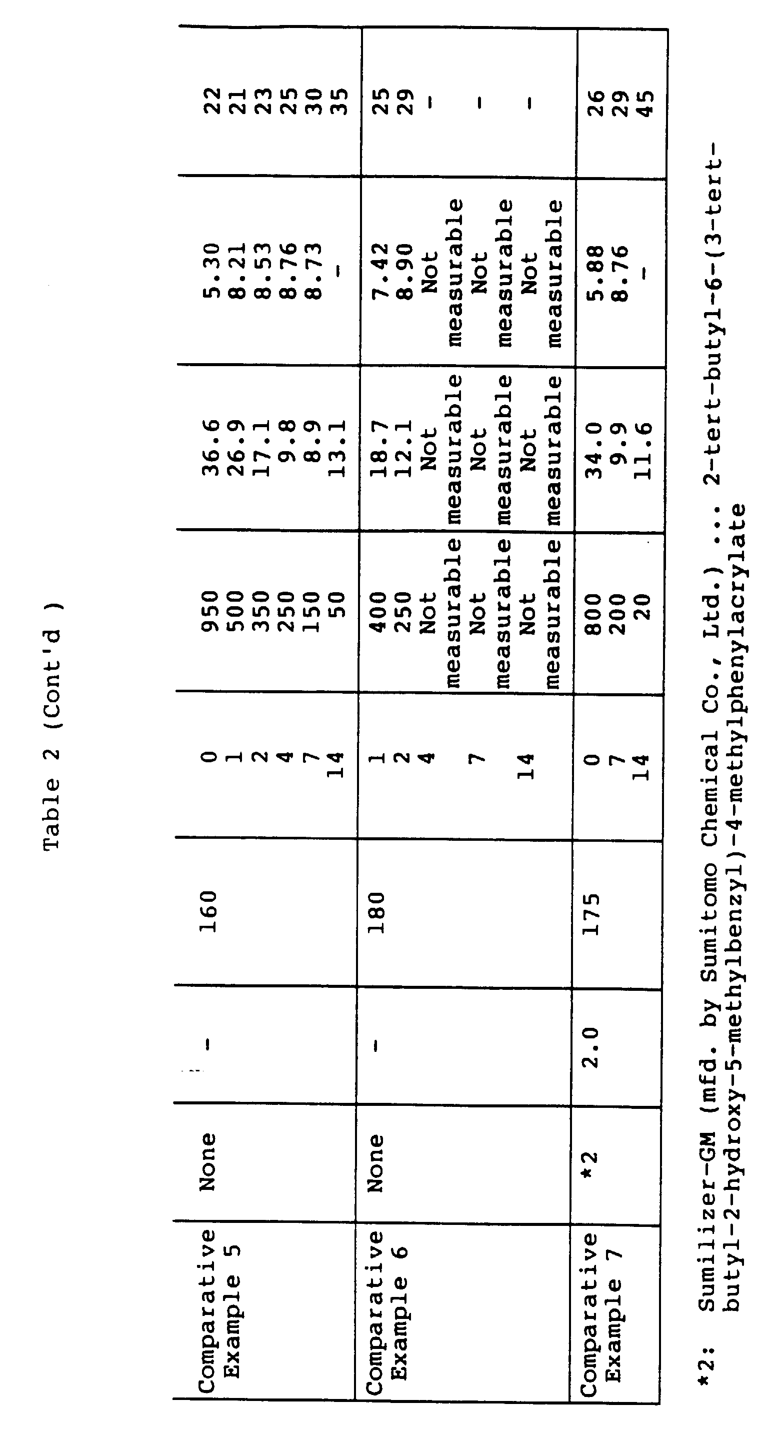

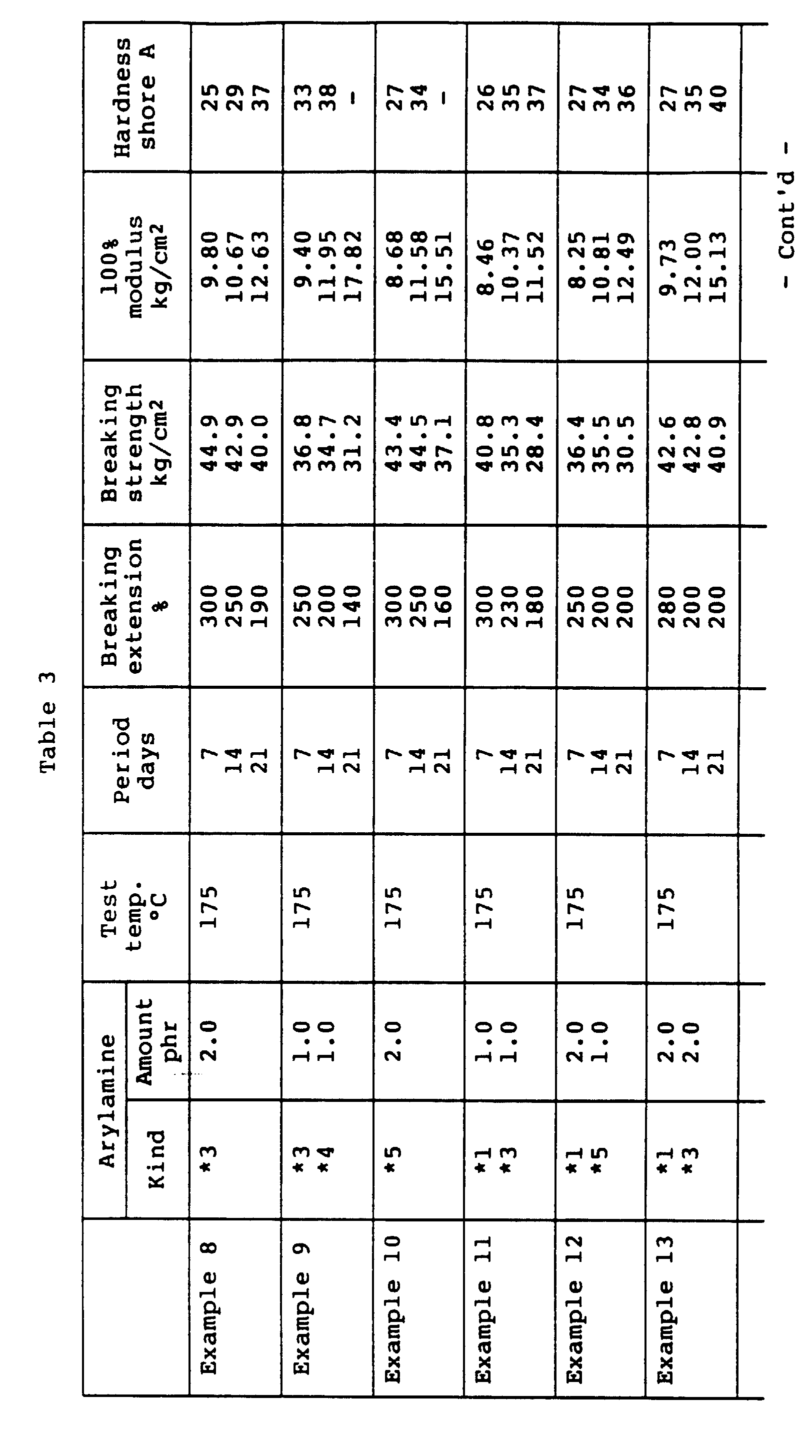

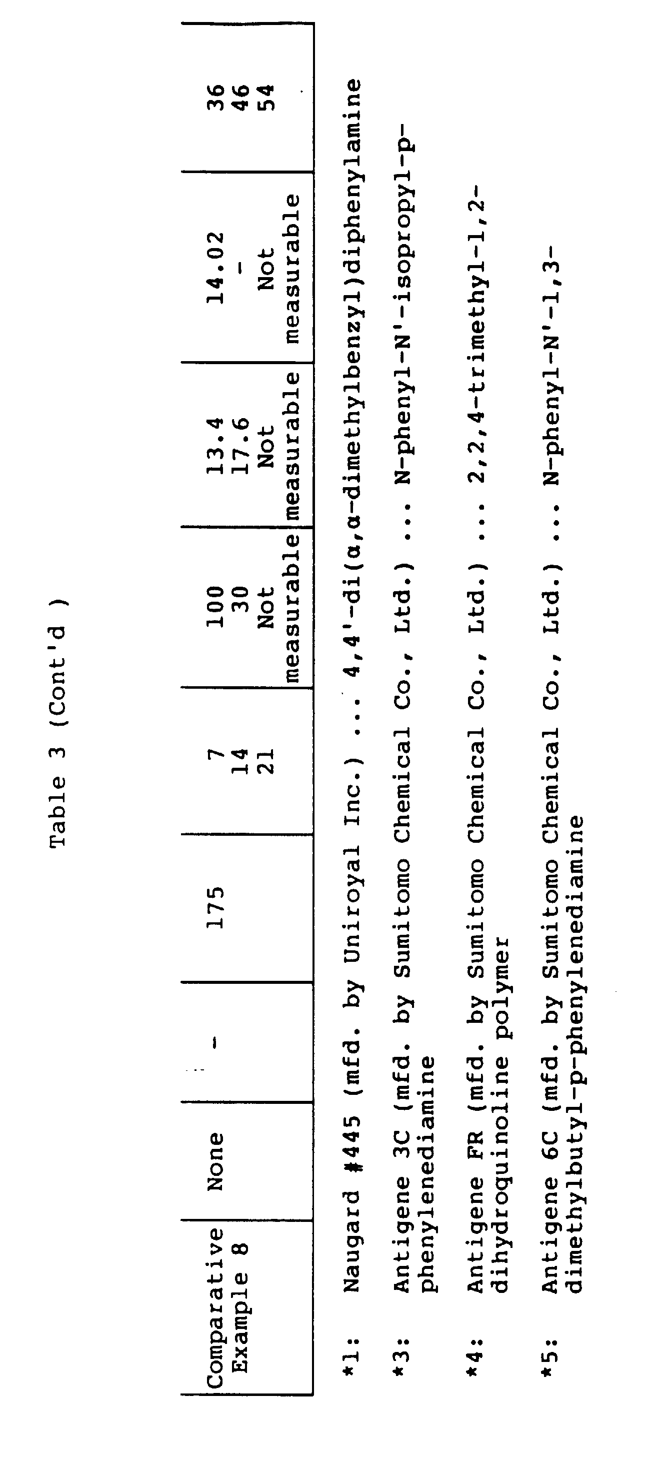

### Examples 14 to 17 and Comparative Examples 9 to 11

Thermoplastic graft copolymer compositions were obtained by melt-kneading 50 g of the same graft copolymer as used in Example 1 with the stabilizer listed in Table 4, at 240°C and 100 rpm for 2 minutes by means of the same kneading apparatus as used in Example 1. Each of the various graft copolymer compositions obtained was press-molded in the same manner as described in Example 1 and subjected to the same evaluations as described in Example 1. The results obtained are shown in Table 4.

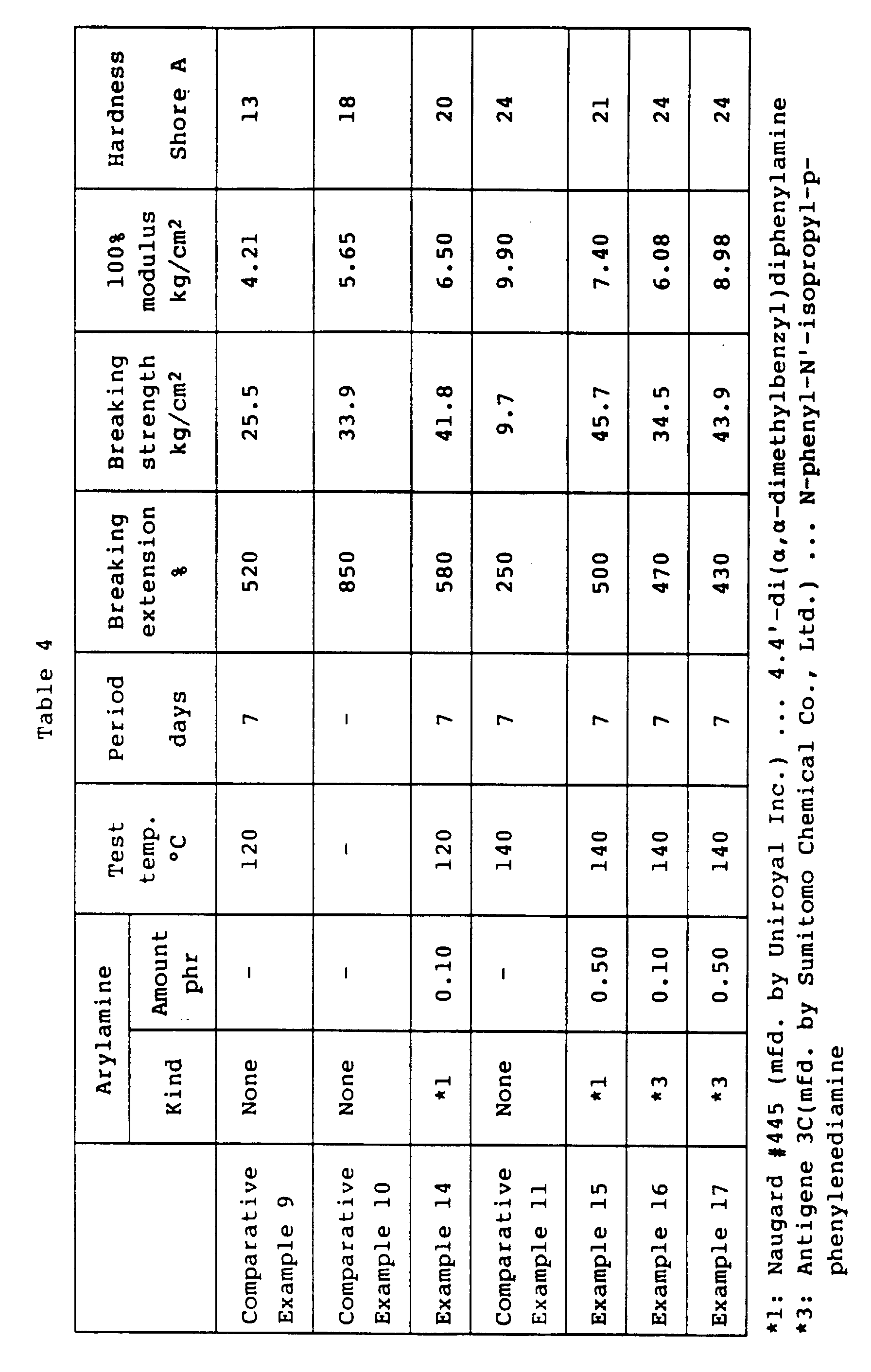

The thermoplastic graft copolymer composition of the present invention can be melt-molded, shows a behavior as a substance having rubber elasticity, is very useful as a thermoplastic elastomer, has a markedly improved thermal aging resistance by virtue of blending of at least one specified arylamine compound, and can be expected to have rubber-like properties for a long period of time when put to a practical use.

Therefore, said composition is of very wide application, for example, it can be used in various-hose materials such as oil cooler hoses, air ducts, power steering hoses, control hoses, oil return hoses, heat-resistant hoses, etc., sealing materials such as various oil seals, O-rings, packings, gaskets, etc., and various diaphragms, rubber plates, belts, oil level gauges, hose maskings, sound insulators and the like. Thus, said composition is useful.

## Claims

1. A thermoplastic graft copolymer composition comprising
100 parts by weight of a thermoplastic graft copolymer obtained by graft copolymerizing an aromatic oligomer having a flow temperature of 100°C or higher onto a polymer having a glass transition temperature of 10°C or lower obtained by copolymerizing an acrylic acid alkyl ester, ethylene and an unsaturated monomer copolymerizable with them, and
0.1 to 6 parts by weight of at least one arylamine compound,
the flow temperture being that temperature at which, when the aromatic oligomer is melted with heating at a heating rate of 4°C/min and extruded through a nozzle with an inside diameter of 1 mm and a length of 10 mm under a load of 100 kg/cm², the melt viscosity of the molten oligomer is 48,000 poise.

2. A thermoplastic graft copolymer composition according to Claim 1, wherein the acrylic acid alkyl ester is at least one member selected from the group consisting of methyl acrylate, ethyl acrylate, n-propyl acrylate and n-butyl acrylate.

3. A thermoplastic graft copolymer composition according to Calim 1 or Claim 2, wherein the unsaturated monomer is at least one member selected from the group consisting of glycidyl methacrylate, glycidyl acrylate, methacrylic acid, maleic acid monoalkyl esters, 2-hydroxyethyl methacrylate and 2-vinyl-substituted 2-oxazoline.

4. A thermoplastic graft copolymer composition according to any of Claims 1 to 3, wherein the aromatic oligomer comprises 50% by weight or more of p-oxybenzoate units.

5. A thermoplastic graft copolymer composition according to any of Claims 1 to 4, wherein the number average molecular weight of the aromatic ologomer is 300 to 1,500.

6. A thermoplastic graft copolymer composition according to any of Claims 1 to 5, wherein the aromatic oligomer has at least one member selected from the group consisting of hydroxyl group, carboxyl group and acid anhydrides, at one end as a functional group.

7. A thermoplastic graft copolymer composition according to any of Claims 1 to 6, wherein the polymer having a glass transition temperature of 10°C or lower is one which is obtained by copolymerizing at least one acrylic acid alkylester, ethylene and at least one unsaturated monomer having an epoxy group in the molecule which is copolymerizable with them, and the aromatic oligomer has in the molecule one carboxyl group as a functional group.

8. A thermoplastic graft copolymer composition according to any of Claims 1 to 7, wherein the arylamine compound is at least one member selected from the group consisting of p-phenylenediamine derivatives, ketone-amine condensation products, naphthylamine and its derivatives, and diphenylamine derivatives.

9. A thermoplastic graft copolymer composition according to Claim 8, wherein the arylamine compound is a diphenylamine derivative.

10. A thermoplastic graft copolymer composition according to Claim 9, wherein the arylamine compound is 4,4'-di(α,α-dimethylbenzyl)diphenylamine.

## Patentansprüche

1. Thermoplastische Pfropfcopolymerzusammensetzung umfassend
100 Gewichtsteile eines thermoplastischen Pfropfcopolymers erhalten durch Pfropfcopolymerisation eines aromatischen Oligomers mit einer Fließtemperatur von 100°C oder mehr auf ein Polymer mit einer Glasübergangstemperatur von 10°C oder weniger, erhalten durch Copolymerisation eines Acrylsäurealkylesters, Ethylen und eines damit copolymerisierbaren ungesättigten Monomers, und
0,1 bis 6 Gewichtsteile wenigstens einer Arylaminverbindung,
wobei die Fließtemperatur die Temperatur ist, bei der, wenn das aromatische Oligomer bei einer Erhitzungsgeschwindigkeit von 4°C/min erhitzt und durch eine Düse mit einen Innendurchmesser von 1 mm und einer Länge von 10 mm bei einer Belastung von 100 kg/cm² extrudiert wird, die Schmelzviskosität des geschmolzenen Oligomers 48 000 Poise beträgt.

2. Thermoplastische Pfropfcopolymerzusammensetzung gemäß Anspruch 1, wobei der Acrylsäurealkylester mindestens einer ausgewählt aus Methylacrylat, Ethylacrylat, n-Propylacrylat und n-Butylacrylat ist.

3. Thermoplastische Pfropfcopolymerzusammensetzung gemäß Anspruch 1 oder 2, wobei das ungesättigte Monomer mindestens eines ausgewählt aus Glycidylmethacrylat, Glycidylacrylat, Methacrylsäure, Maleinsäuremonoalkylestern, 2-Hydroxyethylmethacrylat und 2-vinylsubstituiertem 2-Oxazolin ist.

4. Thermoplastische Pfropfcopolymerzusammensetzung gemäß einem der Ansprüche 1 bis 3, wobei das aromatische Oligomer 50 Gew.-% oder mehr an p-Oxybenzoateinheiten umfaßt.

5. Thermoplastische Pfropfcopolymerzusammensetzung gemäß einem der Ansprüche 1 bis 4, wobei das zahlengemittelte Molekulargewicht des aromatischen Oligomers 300 bis 1500 beträgt.

6. Thermoplastische Pfropfcopolymerzusammensetzung gemäß einem der Ansprüche 1 bis 5, wobei das aromatische Oligomer wenigstens eine Hydroxylgruppe, Carboxygruppe oder ein Säureanhydrid als funktionelle Gruppe an einem Ende trägt.

7. Thermoplastische Pfropfcopolymerzusammensetzung gemäß einem der Ansprüche 1 bis 6, wobei das Polymer mit einer Glasübergangstemperatur von 10°C oder weniger dadurch erhalten wird, daß wenigstens ein Acrylsäurealkylester, Ethylen und wenigstens ein damit copolymerisierbares ungesättigtes Monomer mit einer Epoxygruppe im Molekül copolymerisiert werden und das aromatische Oligomer eine Carboxygruppe als funktionelle Gruppe im Molekül trägt.

8. Thermoplastische Pfropfcopolymerzusammensetzung gemäß einem der Ansprüche 1 bis 7, wobei die Arylaminverbindung mindestens eine ausgewählt aus p-Phenylendiaminderivaten, Keton-Amin-Kondensationsprodukten, Naphthylamin und seinen Derivaten und Diphenylaminderivaten ist.

9. Thermoplastische Pfropfcopolymerzusammensetzung gemäß Anspruch 8, wobei die Arylaminverbindung ein Diphenylaminderivat ist.

10. Thermoplastische Pfropfcopolymerzusammensetzung gemäß Anspruch 9, wobei die Arylaminverbindung 4,4'-Di(α,α-dimethylbenzyl)diphenylamin ist.

## Revendications

1. Composition de copolymère greffé thermoplastique comprenant :
100 parties en poids d'un copolymère greffé thermoplastique obtenu en copolymérisant par greffage un oligomère aromatique ayant une température d'écoulement de 100°C ou plus sur un polymère ayant une température de transition vitreuse de 10°C ou moins obtenu en copolymérisant un ester alkylique d'acide acrylique, de l'éthylène et un monomère insaturé copolymérisable avec ceux-ci, et
0,1 à 6 parties en poids d'au moins un composé arylamine,
la température d'écoulement étant la température à laquelle, quand l'oligomère aromatique est fondu par chauffage à une vitesse de chauffage de 4°C/min et extrudé à travers une buse avec un diamètre interne de 1 mm et une longueur de 10 mm sous une charge de 100 kg/cm², la viscosité à l'état fondu de l'oligomère fondu est de 48 000 poises.

2. Composition de copolymère greffé thermoplastique selon la revendication 1, dans laquelle l'ester alkylique d'acide acrylique est au moins un élément choisi dans le groupe formé par l'acrylate de méthyle, l'acrylate d'éthyle, l'acrylate de n-propyle et l'acrylate de n-butyle.

3. Composition de copolymère greffé thermoplastique selon la revendication 1 ou 2, dans laquelle le monomère insaturé est au moins un élément choisi dans le groupe formé par le méthacrylate de glycidyle, l'acrylate de glycidyle, l'acide méthacrylique, les esters monoalkyliques d'acide maléique, le méthacrylate de 2-hydroxyéthyle et la 2-oxazoline 2-vinyl-substituée.

4. Composition de copolymère greffé thermoplastique selon l'une quelconque des revendications 1 à 3, dans laquelle l'oligomère aromatique comprend 50% en poids ou plus de motifs p-oxybenzoate.

5. Composition de copolymère greffé thermoplastique selon l'une quelconque des revendications 1 à 4, dans laquelle la masse moléculaire moyenne en nombre de l'oligomère aromatique est de 300 à 1 500.

6. Composition de copolymère greffé thermoplastique selon l'une quelconque des revendications 1 à 5, dans laquelle l'oligomère aromatique possède au moins un élément choisi dans le groupe formé par les groupes hydroxyle, carboxyle et anhydride d'acide, à une extrémité en tant que groupe fonctionnel.

7. Composition de copolymère greffé thermoplastique selon l'une quelconque des revendications 1 à 6, dans laquelle le polymère ayant une température de transition vitreuse de 10°C ou moins est celui que l'on obtient en copolymérisant au moins un ester alkylique d'acide acrylique, de l'éthylène et au moins un monomère insaturé ayant un groupe époxy dans la molécule qui est copolymérisable avec eux, et l'oligomère aromatique possède dans la molécule un groupe carboxyle en tant que groupe fonctionnel.

8. Composition de copolymère greffé thermoplastique selon l'une quelconque des revendications 1 à 7, dans laquelle le composé arylamine est au moins un élément choisi dans le groupe formé par les dérivés de la p-phénylène-diamine, les produits de condensation cétone-amine, la naphtylamine et ses dérivés et les dérivés de la diphénylamine.

9. Composition de copolymère greffé thermoplastique selon la revendication 8, dans laquelle le composé arylamine est un dérivé de la diphénylamine.

10. Composition de copolymère greffé thermoplastique selon la revendication 9, dans laquelle le composé arylamine est la 4,4'-di(α,α-diméthylbenzyl)diphénylamine.
